(19) Europäisches Patentamt / European Patent Office / Office européen des brevets

(11) **EP 1 746 487 B1**

(12) **FASCICULE DE BREVET EUROPEEN**

(45) Date de publication et mention
de la délivrance du brevet:
**16.12.2009 Bulletin 2009/51**

(51) Int Cl.:
***G06F 3/042*** *(2006.01)*    *G06T 7/20* *(2006.01)*

(21) Numéro de dépôt: **06291106.0**

(22) Date de dépôt: **04.07.2006**

(54) **Procédé et dispositif de détection de déplacement d'une entité pourvue d'un capteur d'images**

Verfahren und Vorrichtung zur Bewegungsdetektion einer Einheit, die mit einem Bildsensor versehen ist

Process and device for detection of movement of an entity fitted with an image sensor

(84) Etats contractants désignés:
**DE FR GB IT**

(30) Priorité: **05.07.2005 FR 0507167**

(43) Date de publication de la demande:
**24.01.2007 Bulletin 2007/04**

(73) Titulaire: **STMICROELECTRONICS SA**
**92120 Montrouge (FR)**

(72) Inventeur: **Mellot, Pascal**
**38250 Lans en Vercors (FR)**

(74) Mandataire: **Vignesoult, Serge L. M. et al**
**Cabinet Plasseraud**
**52, rue de la Victoire**
**75440 Paris Cedex 09 (FR)**

(56) Documents cités:
**EP-A- 1 361 541**

• **ROVATI F S ET AL: "SPATIAL-TEMPORAL MOTION ESTIMATION FOR IMAGE RECONSTRUCTION AND MOUSE FUNCTIONALITY WITH OPTICAL OR CAPACITIVE SENSORS" IEEE TRANSACTIONS ON CONSUMER ELECTRONICS, IEEE SERVICE CENTER, NEW YORK, NY, US, vol. 49, no. 3, août 2003 (2003-08), pages 711-718, XP001172119 ISSN: 0098-3063**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 746 487 B1

**Description**

La présente invention est relative aux procédés d'estimation de mouvement adaptés pour traiter une séquence d'images fournies, directement ou indirectement, par un capteur d'images en mouvement, afin par exemple de détecter le mouvement d'une entité pourvue de ce capteur d'images.

Ainsi, la présente invention est particulièrement adaptée pour une souris optique reliée à un ordinateur dans les systèmes informatiques.

De tels traitements d'images ont pour objectif de détecter des mouvements de la souris afin de les retranscrire sous la forme d'un mouvement de curseur sur un écran d'ordinateur. On détecte généralement le mouvement de la souris optique sur la base d'informations captées par un capteur vidéo ou un autre type de capteur qui est fixé sur la souris optique.

De tels capteurs fournissent un signal numérique sous la forme d'une séquence d'images captées lors du déplacement de la souris. Ce signal numérique est alors traité afin d'en déduire le mouvement de la souris.

Généralement, on déplace la souris sur une surface adaptée et le capteur vidéo fixé sur la souris capture des images de cette surface pendant son déplacement. Le déplacement de la souris peut alors être reconstruit à partir des positions relatives d'objets dans les images capturées successives. Ainsi, à partir de ce déplacement, on en déduit le déplacement qui peut être donné au curseur représentant le mouvement de la souris sur l'écran de l'ordinateur.

Certains traitements d'images de ce type s'avèrent être complexe. Ils peuvent en effet requérir des calculs puissants et de ce fait coûteux en temps et/ou en capacité de calculs, et en consommation d'énergie, posant également des problèmes de dissipation de la chaleur.

Afin de rendre l'affichage du curseur de la souris optique plus facilement réalisable, il est avantageux d'appliquer un procédé d'estimation de mouvement.

Un tel procédé permet d'estimer le mouvement d'un bloc de pixels donné entre deux images qui se suivent.

Certains procédés de ce type sont utilisés dans un autre domaine technique qui est celui de la compression de flux de vidéo. On connaît notamment une méthode décrite dans le document 'Complexity Comparison of fast block-matching estimation algorithms' de Yilong Liu et Soontorn Oraintara.

Dans le domaine de la détection de déplacement d'une entité, ces procédés sont basés sur une association d'un vecteur de mouvement à chacune des images traitées. Un tel vecteur a une composante verticale et une composante horizontale. Il représente le mouvement de la souris d'une image à l'autre.

Ainsi, dans un tel contexte, le mouvement de tous les pixels de chaque image à traiter peut être représenté par un seul vecteur de mouvement.

Ce type de dispositif est soumis à des contraintes techniques spécifiques, telles que notamment une contrainte temporelle. En effet, le traitement de telles images doit être effectué dans un temps très court afin que le mouvement de la souris puisse être retranscrit sur l'écran de l'ordinateur de manière quasi instantanée pour l'utilisateur. Une autre contrainte très importante de ce type de dispositif est le coût de production.

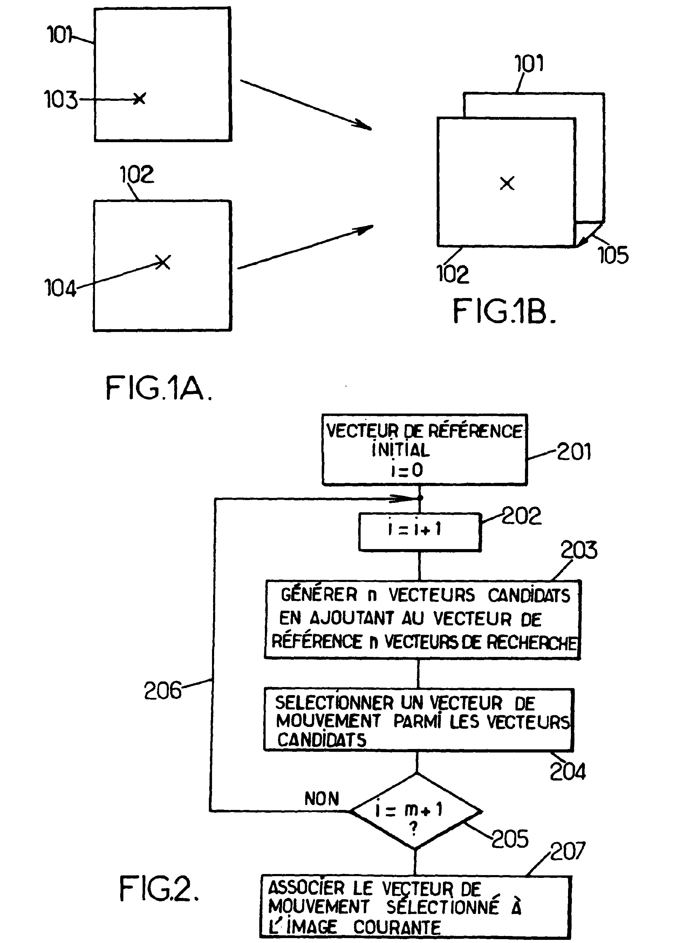

Les figures 1-A et 1-B illustrent une définition d'un vecteur de mouvement. Sur la figure 1-A, une séquence de deux images est représentée, une première image 101 est suivie d'une seconde image 102. La détection de déplacement de la souris est basée sur la position relative de certains repères compris dans les différentes images captées. L'image 101 comprend un repère en position 103 et l'image 102 comprend le même repère en position 104. Ainsi, on en déduit le déplacement de la souris optique à partir de sa position par rapport à ce repère.

Sur la figure 1-B, les images 101 et 102 sont superposées de telle sorte que les positions respectives du repère coïncident. Le vecteur de mouvement correspondant au déplacement de la souris dans un ce contexte est représenté par la flèche 105. Ses composantes suivant l'horizontale et suivant la verticale sont nommées X et Y. Ainsi, le mouvement de la souris entre l'image 101 et l'image 102 peut être représenté dans la suite par le vecteur de mouvement 105. On peut ainsi associer à l'image 101 le vecteur de mouvement 105 qui permet de retrouver la position de la souris dans l'image 102 suivante.

Afin d'estimer le mouvement de la souris associé dans une image courante, c'est-à-dire en cours de traitement, on se base généralement sur des vecteurs de mouvement précédemment associés à des images traitées précédentes dans la séquence d'images captées par la souris. Puis, à partir de tels vecteur de mouvement, on génère des vecteurs candidats, c'est-à-dire des vecteurs qui sont susceptibles de représenter le mouvement de la souris entre deux images traitées successives. Ensuite, relativement à ces vecteurs candidats, on effectue des calculs de corrélation de position de la souris, dont des exemples sont bien connus de l'homme du métier. On sélectionne alors le vecteur candidat pour lequel on calcule la plus grande corrélation. Ce dernier est ensuite associé à l'image courante.

Les termes « image traitée » font référence à des images auxquelles un vecteur de mouvement a été associé.

Il convient de noter que, dans ce type de procédé, s'il s'avère que les vecteur candidats ne sont pas pertinents, et quand bien même on associe à l'image courante celui qui présente la meilleure corrélation, un tel système peut diverger. Ainsi, une divergence apparaît souvent en cas de mouvement brusque de la souris.

Par conséquent, la performance des dispositifs appliquant un procédé d'estimation de mouvement est grandement dépendante de la qualité des vecteurs candidats. Il est donc souhaitable de disposer d'une méthode de génération de vecteurs candidats et de sélection d'un vecteur de mouvement à associer à une image, qui soit efficace et précise.

Le document EP 1 361 541 A1 décrit un procédé d'estimation de mouvement au cours duquel une étape de génération d'une pluralité de vecteurs de mouvement candidats et une étape de sélection d'un vecteur de mouvement candidat parmi cette pluralité sont successivement répétées. Dans ce procédé, les vecteurs de mouvement candidats sont obtenus en combinant un vecteur de mouvement de référence avec des vecteurs de recherche déterminés de manière aléatoire.

La présente invention vise à satisfaire ces besoins.

Un premier aspect de l'invention propose ainsi un procédé de détection de déplacement d'une entité pourvue d'un capteur de séquence d'images, le procédé comprenant, pour associer un vecteur de mouvement à une image de la séquence en cours de traitement, les étapes consistant à :

/a/ générer k vecteurs candidats en ajoutant, à un vecteur de mouvement de référence, respectivement k vecteurs de recherche ;
/b/ sélectionner un vecteur de mouvement parmi lesdits k vecteurs candidats en fonction d'une règle de sélection donnée ;
c/ répéter m fois les deux étapes précédentes, ledit vecteur de mouvement de référence étant d'une part, pour une première itération de l'étape /a/, un vecteur de référence initial sélectionné parmi un ensemble de vecteurs comprenant au moins un vecteur de mouvement associé à une image traitée précédente et étant d'autre part, pour les m répétitions de l'étape /a/, le vecteur de mouvement sélectionné à l'étape /b/ précédant ladite étape /a/;
/d/ associer à l'image en cours de traitement le vecteur obtenu à l'étape /c/ ;

m étant un entier supérieur ou égal à 1 et k étant un entier strictement supérieur à 1 ;
suivant lequel une amplitude des vecteurs de recherche correspondant à la première itération de l'étape /a/ est déterminée en sélectionnant la plus grande valeur parmi une valeur de seuil donnée, une composante horizontale divisée par deux et une composante verticale divisée par deux du vecteur de mouvement associé à l'image traitée précédente.

Dans un mode de réalisation, une direction d'un premier et d'un deuxième vecteurs de recherche est horizontale, et une direction d'un troisième et d'un quatrième vecteurs de recherche est verticale ; les premier et deuxième vecteurs de recherche d'une part, et les troisième et quatrième vecteurs de recherche d'autre part, étant de sens respectifs opposés.

Une amplitude des vecteurs de recherche correspondant à la première itération de l'étape /a/ peut être déterminée en sélectionnant la plus grande valeur parmi une valeur de seuil donnée, une composante horizontale divisée par deux et une composante verticale divisée par deux du vecteur de mouvement associé à l'image traitée précédente.

Dans un mode de réalisation de la présente invention, une amplitude des vecteurs de recherche correspondant à une répétition de l'étape /a/ est déterminée en sélectionnant la plus grande valeur parmi une valeur de seuil donnée, une composante horizontale divisée par deux et une composante verticale divisée par deux du vecteur de recherche correspondant au vecteur de mouvement sélectionné à l'étape /b/ précédant ladite étape /a/.

La règle de sélection appliquée à l'étape /b/ peut être basée sur un calcul de corrélation entre un premier bloc de pixels dans l'image en cours de traitement et un second bloc de pixels dans l'image traitée précédente à partir duquel le vecteur candidat pointe le premier bloc de pixels, le vecteur candidat permettant une corrélation la plus élevée étant sélectionné.

Plus précisément, le calcul de corrélation peut comprendre un calcul de la somme des valeurs absolues des différences, pour tout ou partie des pixels du premier bloc, entre la valeur d'un pixel du premier bloc de pixels et la valeur du pixel du second bloc de pixels pointé par le vecteur candidat à partir dudit pixel du premier bloc de pixels.

Dans un mode de réalisation de la présente invention, l'ensemble de vecteurs de mouvement parmi lesquels le vecteur de mouvement de référence est sélectionné pour la première itération de l'étape /a/ comprend en outre le vecteur nul.

Ainsi, on est en mesure de sélectionner un vecteur de référence initial qui permet une application performante du' procédé selon un mode de réalisation.

De préférence, m est égal à 2 et k est égal à 4. C'est un mode de réalisation permettant un compromis avantageux entre coût de calculs et performance.

Un deuxième aspect de la présente invention propose un dispositif de détection de déplacement d'une entité pourvue d'un capteur mobile comprenant des moyens adaptés pour mettre en oeuvre le procédé selon le premier aspect ci-dessus.

Un troisième aspect de l'invention propose une souris optique comprenant un capteur mobile d'images adaptée pour coopérer avec un dispositif de détection de déplacement selon le deuxième aspect ci-dessus.

D'autres aspects, buts et avantages de l'invention apparaîtront à la lecture de la description d'un de ses modes de réalisation.

L'invention sera également mieux comprise à l'aide des dessins annexés, sur lesquels :

- les figures 1-A et 1-B qui ont déjà été commentées illustrent un vecteur de mouvement dans une application de détection de déplacement d'une souris optique ;
- la figure 2 illustre les principales étapes d'un procédé de détection de déplacement selon un mode de réalisation de la présente invention ;
- la figure 3 illustre une étape consistant à obtenir un vecteur de référence initial dans un procédé selon un mode de réalisation de la présente invention;
- la figure 4 illustre, à l'aide des vecteurs représentés, différentes étapes d'un procédé selon un mode de réalisation de la présente invention.

La présente invention est plus particulièrement décrite dans son application à la détection de déplacement d'une souris optique. Bien sûr, il est aisé d'en déduire une application à tout système dans lequel on applique un traitement de séquence d'images pour détecter des mouvements d'un capteur mobile par rapport à un repère fixe.

La figure 2 illustre les principales étapes d'un procédé de détection de déplacement selon un mode de réalisation de la présente invention.

Ces étapes peuvent être appliquées relativement à chaque image captée par le capteur d'images solidaires de la souris. Bien sûr, dans certaines circonstances, il peut être avantageux de ne traiter qu'une partie des images captées à l'aide de ces étapes.

Ainsi, pour une image en cours de traitement, on sélectionne en premier lieu un vecteur de mouvement de référence initial parmi un ensemble de vecteurs de mouvement. Dans un mode de réalisation de l'invention, cet ensemble comprend le vecteur de composantes nulles ainsi que le vecteur de mouvement associé à l'image précédemment traitée dans la séquence d'images captées. Puis, le vecteur de référence initial est sélectionné selon une règle qui sera détaillée plus loin.

A l'étape 201, le procédé est initialisé avec un vecteur de référence initial et on initialise un index i à 0.

Puis, à l'étape 202, on incrémente l'index i d'une unité.

Ensuite, à l'étape 203, on génère k vecteurs candidats, k étant un nombre entier strictement supérieur à 1. Ces vecteurs candidats sont générés en ajoutant au vecteur de référence initial respectivement k vecteurs de recherche. Deux de ces vecteurs peuvent être de direction horizontale et de sens opposés respectifs, alors que les deux autres sont de direction verticale et de sens respectivement opposés. Ces k vecteurs de recherche peuvent donc être avantageusement au nombre de 4. Mais on peut avoir moins ou plus selon des directions autres que la verticale et l'horizontale.

A l'étape 204, un vecteur de mouvement est sélectionné parmi les vecteurs candidats ainsi générés. Une telle sélection peut être effectuée sur la base de différents critères qui seront décrits par la suite.

On effectue m+1 fois les étapes 202, 203 et 204, m étant un entier supérieur à 1. A cet effet, à l'étape 205, on compare la valeur de l'index i à la valeur m+1. Dans le cas où i est inférieur à m+1, on effectue à nouveau les étapes 202 à 205.

Dans ce cas, à chaque répétition de l'étape 203, le vecteur de mouvement de référence est le vecteur de mouvement sélectionné à l'étape 204 qui vient d'être effectuée.

Après m répétitions des étapes 202 à 204, l'étape 207 est alors effectuée. A cette étape, on associe le vecteur de mouvement sélectionné à l'étape 204 précédente à l'image en cours de traitement.

Le procédé est simple et rapide à mettre en oeuvre et permet de sélectionner un vecteur de mouvement fiable pour les images de la séquence d'images captées par une souris.

Tout ou partie de ces vecteurs de mouvement associés peuvent être stockés dans une mémoire. Ils peuvent ainsi être lus, de manière asynchrone, par une fonction d'affichage qui se base sur ces vecteurs pour déplacer un symbole (par exemple un curseur) sur un écran d'ordinateur dont le mouvement suit alors le mouvement de la souris optique.

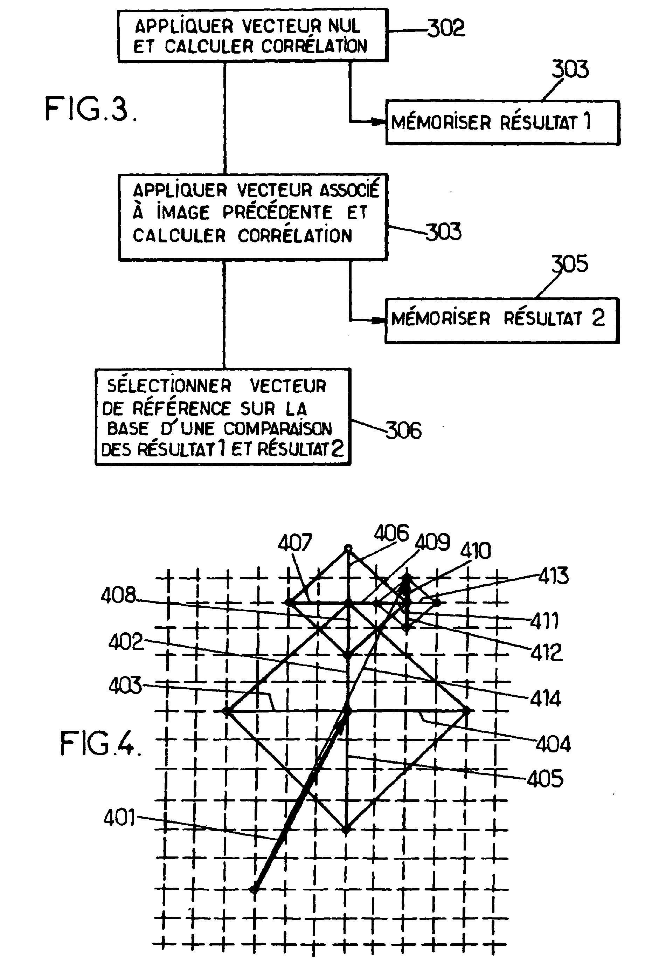

La figure 3 illustre une étape permettant d'obtenir un vecteur de référence initial dans un procédé selon un mode de réalisation.

Pour la suite, on indexe les images successives de la séquence d'images captées. En référence à la figure 3, l'image en cours de traitement est l'image indexée n, l'image précédemment traitée étant l'image indexée n-1. On note que l'image traitée précédente peut ne pas être l'image précédente dans la séquence d'images captées. En effet, dans certaines conditions, il peut être avantageux de ne pas traiter toutes les images captées de la séquence d'images.

Les images captées comprennent un nombre N de pixels chacune, ce nombre pouvant notamment être égal à 400, par exemple pour une image d'une dimension de 20 pixels sur 20 pixels.

Dans un tel mode de réalisation, l'ensemble de vecteurs de mouvement à partir duquel on sélectionne un vecteur de mouvement de référence initial comprend le vecteur nul et le vecteur de mouvement associé à l'image traitée précédente. Il convient ici de noter qu'il est possible d'adapter un tel procédé à un ensemble de vecteurs comprenant un plus grand nombre de vecteurs de mouvement.

Par ailleurs, de préférence, on définit un bloc de pixels au sein des N pixels représentant l'image n-1, et on applique les étapes suivantes aux pixels de ce bloc de pixels. On peut, par exemple, considérer un bloc de pixels de 14 pixels sur 14 pixels.

Ainsi, à l'étape 301, les N pixels de l'image n-1 précédemment traitée, et le vecteur de mouvement associé à cette image sont stockés en mémoire.

A l'étape 302, on applique le vecteur nul au bloc de pixels défini dans l'image n-1 et on effectue un calcul de corrélation entre la valeur des pixels du bloc de pixels de l'image n-1 et la valeur des pixels du bloc de pixels pointé correspondant dans l'image n. A cet effet, on peut par exemple, pour chacun des pixels de la fenêtre, calculer la différence entre la valeur de ce pixel et la valeur du pixel pointé par le vecteur nul dans l'image n. On effectue ensuite la somme des valeurs absolues des différences ainsi obtenues et on obtient un premier résultat de corrélation.

A l'étape 303, le résultat de cette corrélation est ensuite pondéré par une valeur, qui est de préférence une valeur de configuration, avant d'être stocké en mémoire. Une telle pondération est bien sûr facultative et vise à améliorer la précision d'un tel procédé. Une valeur de pondération peut être avantageusement déterminée en fonction de la vitesse des images dans la séquence d'images captées.

Puis, à l'étape 304, on applique au bloc de pixels considéré dans l'image n-1, le vecteur de mouvement déjà associé à cette image. On effectue alors un calcul de corrélation. A cet effet, de préférence, on calcule pour chacun des pixels du bloc de pixels considéré dans l'image n-1, la différence entre la valeur d'un pixel donné de l'image n-1 et la valeur du pixel correspondant dans l'image n, c'est-à-dire le pixel de l'image n pointé à partir du pixel donné par le vecteur de mouvement associé à l'image n-1.

On effectue la somme des valeurs absolues des différences et on obtient donc un second résultat de corrélation que l'on stocke en mémoire, à l'étape 305.

On note que les étapes 302 et 304 peuvent être effectuées dans un ordre quelconque.

A l'étape 306, on compare le premier et le second résultats de corrélation, et sur la base de cette comparaison, on sélectionne parmi le vecteur nul et le vecteur de mouvement associé à l'image n-1, le vecteur qui permet d'obtenir la plus grande corrélation.

La figure 4 représente sous forme vectorielle différentes étapes d'un procédé selon un mode de réalisation de la présente invention. Cette représentation vectorielle est faite sur une grille de carrés qui ont chacun des côtés d'une longueur correspondant à une fraction de pixel. Une telle longueur peut par exemple être égale à $1/32^{ème}$ de la longueur d'un pixel.

Un vecteur 401 représente le vecteur de mouvement de référence initial, à partir duquel les différentes étapes du procédé selon un mode de réalisation tel qu'illustré à la figure 2 sont appliquées. Dans un mode de réalisation, le vecteur 401 est le vecteur de mouvement associé à l'image n-1. Dans l'exemple décrit, on considère que la valeur de m est égale à 2.

A la première itération de l'étape 202, l'index i est égal à 1.

Ensuite, à l'étape 203, dans l'exemple illustré à la figure 4, on génère 4 vecteurs candidats à partir du vecteur de mouvement de référence 401, de coordonnées $X_{ref}$ et $Y_{ref}$, en y ajoutant respectivement 4 vecteurs de recherche. Le premier vecteur candidat est obtenu en ajoutant au vecteur de mouvement de référence 401, un premier vecteur de recherche de composante verticale nulle et de composante horizontale déterminée en fonction d'au moins une composante du vecteur de mouvement de référence initial. L'invention couvre toute méthode permettant de déterminer une telle composante en fonction d'au moins une des composantes du vecteur de mouvement de référence.

On peut ainsi, par exemple, déterminer les coordonnées du premier vecteur de recherche, notées $X_1$ et $Y_1$, selon l'équation suivante :

$$X_1 = Max\ [val_{th}\ ;\ \tfrac{1}{2}^{*}\ |X_{ref}|\ ;\ \tfrac{1}{2}^{*}\ |Y_{ref}|)]$$

$$Y_1 = 0$$

où $val_{th}$ est une valeur de seuil de préférence configurable, qui permet de garantir une certaine amplitude du vecteur de recherche, quelque soit les composantes du vecteur de mouvement de référence.

On obtient alors le premier vecteur de recherche 404.

Puis, les coordonnées du deuxième vecteur de recherche peuvent vérifier l'équation suivante :

$$X_2 = -\ Max\ [val_{th};\ \tfrac{1}{2}^{*}\ |X_1|\ ;\ \tfrac{1}{2}^{*}\ |Y_1|)]$$

$$Y_2 = 0$$

On obtient alors le deuxième vecteur de recherche 403.

Puis, les coordonnées du troisième vecteur de recherche peuvent vérifier l'équation suivante :

$$X_3 = 0$$

$$Y_3 = \text{Max} [\text{val}_{th}; \tfrac{1}{2}^* |X_2| ; \tfrac{1}{2}^* |Y_2|)]$$

On obtient alors le troisième vecteur de recherche 402.

Puis, les coordonnées du quatrième vecteur de recherche peuvent vérifier l'équation suivante :

$$X_4 = 0$$

$$Y_4 = - \text{Max} [\text{val}_{th}, \tfrac{1}{2}^* |X_3| ; \tfrac{1}{2}^*|Y_3|)]$$

On obtient alors le quatrième vecteur de recherche 405.

On note que la valeur de seuil est préférablement prise en compte pour la détermination des composantes des vecteurs de recherche afin d'améliorer la convergence d'un tel procédé. Toutefois, dans une variante, il est possible de déterminer les vecteurs de recherche seulement à partir des coordonnées du vecteur de référence correspondant.

On obtient donc à l'issue de l'étape 203, les quatre vecteurs candidats suivants :

$$V_{\text{cand1}} = V(X_{\text{ref}}, Y_{\text{ref}}) + V(X_1, Y_1) \qquad (1)$$

$$V_{\text{cand2}} = V(X_{\text{ref}}, Y_{\text{ref}}) + V(X_2, Y_2) \qquad (2)$$

$$V_{\text{cand3}} = V(X_{\text{ref}}, Y_{\text{ref}}) + V(X_3, Y_3) \qquad (3)$$

$$V_{\text{cand4}} = V(X_{\text{ref}}, Y_{\text{ref}}) + V(X_4, Y_4) \qquad (4)$$

On effectue alors l'étape 204 visant à sélectionner un vecteur parmi ces vecteurs candidats.

A cet effet, de préférence, on réalise un calcul de corrélation relativement à chacun de ces vecteurs candidats.

On peut utiliser le calcul des sommes absolues des différences relativement à chacun de ces vecteurs candidats, comme précédemment décrit.

Le vecteur candidat présentant la meilleure corrélation est alors sélectionné. Dans l'exemple décrit, le vecteur candidat $V_{\text{cand3}}$ est sélectionné.

On réitère l'étape 202 et l'étape 203. A cette dernière étape, le vecteur de mouvement de référence considéré est avantageusement le vecteur de mouvement qui vient d'être sélectionné à l'étape 204 précédente, c'est-à-dire le vecteur $V_{\text{cand3}}$.

Puis, on génère à nouveau 4 vecteurs candidats à partir de ce nouveau vecteur de mouvement de référence et de quatre vecteurs de recherche.

On peut par exemple déterminer les coordonnées de ces vecteurs de recherche de la même façon que lors de la première itération de cette étape. On obtient alors le premier vecteur de recherche 409, le deuxième vecteur de recherche 407, le troisième vecteur de recherche 406 et enfin le quatrième vecteur de recherche 408.

Les vecteurs candidats obtenus à la deuxième itération de l'étape 203 vérifient respectivement les équations (1), (2), (3) et (4) en considérant les vecteurs de recherche 409, 407, 406 et 408.

Puis, on effectue des calculs de corrélation correspondants, de la manière telle que décrite précédemment par exemple. Puis, on sélectionne le vecteur candidat présentant la plus grande corrélation. Dans l'exemple illustré, le vecteur de mouvement $V_{\text{cand1}}$ est ainsi sélectionné.

Puis, on réitère une dernière fois les étapes 202 à 205 en considérant comme vecteur de mouvement de référence, le vecteur de mouvement que l'on vient de sélectionner à l'étape 204, $V_{\text{cand1}}$. De la même manière que précédemment indiquée, on obtient les quatre vecteurs de recherche 413, 411, 410 et 412, tels qu'illustrés à la figure 4.

On génère alors les quatre vecteurs candidats à partir du nouveau vecteur de mouvement de référence et des vecteurs de recherche correspondant qui peuvent être avantageusement déterminés comme décrit précédemment. Puis, on effectue pour la troisième fois l'étape 204 de sélection de vecteurs de mouvement parmi ces quatre vecteurs candidats. On peut utiliser à cet effet, les mêmes méthodes que celles précédemment décrites en référence aux itérations précédentes de l'étape 204.

Le nombre m étant égal à 3, on obtient alors le dernier vecteur de mouvement sélectionné, référencé 414. Ensuite, on effectue l'étape 207 au cours de laquelle on associe le dernier vecteur de mouvement sélectionné à l'image en cours de traitement.

On est alors en mesure de traiter l'image n+1 en sélectionnant le vecteur de mouvement initial correspondant à partir du vecteur nul et du vecteur de mouvement associé à la précédente image traitée, c'est-à-dire l'image n.

L'invention permet une estimation de mouvement plus précise et de ce fait un meilleur rendu du mouvement du curseur représentant la souris optique sur un écran, notamment dans le cas de mouvements rapides de la souris.

Un autre aspect de l'invention propose un produit « programme d'ordinateur » chargeable directement dans la mémoire interne d'un ordinateur numérique, comprenant des portions de code de logiciel pour l'exécution des étapes du procédé d'estimation de mouvement selon un mode de réalisation de la présente invention.

## Revendications

1. Procédé de détection de déplacement d'une entité pourvue d'un capteur de séquence d'images, le procédé comprenant, pour associer un vecteur de mouvement à une image de la séquence en cours de traitement, les étapes consistant à :

   /a/ générer (203) k vecteurs candidats en ajoutant, à un vecteur de mouvement de référence, respectivement k vecteurs de recherche ;

   /b/ sélectionner (204) un vecteur de mouvement parmi lesdits k vecteurs candidats en fonction d'une règle de sélection donnée ;

   /c/ répéter m fois les deux étapes précédentes, ledit vecteur de mouvement de référence étant d'une part, pour une première itération de l'étape /a/, un vecteur de référence initial sélectionné parmi un ensemble de vecteurs comprenant au moins un vecteur de mouvement associé à une image traitée précédente et étant d'autre part, pour les m répétitions de l'étape /a/, le vecteur de mouvement sélectionné à l'étape /b/ précédant ladite étape la/ ;

   /d/ associer (207) à l'image en cours de traitement le vecteur obtenu à l'étape /c/ ;

   m étant un entier supérieur ou égal à 1 et k étant un entier strictement supérieur à 1 ;

   suivant lequel une amplitude des vecteurs de recherche correspondant à la première itération de l'étape /a/ est déterminée en sélectionnant la plus grande valeur parmi une valeur de seuil donnée, une composante horizontale divisée par deux et une composante verticale divisée par deux du vecteur de mouvement associé à l'image traitée précédente.

2. Procédé selon la revendication 1, suivant lequel une direction d'un premier et d'un deuxième vecteurs de recherche est horizontale, et une direction d'un troisième et d'un quatrième vecteurs de recherche est verticale ; les premier et deuxième vecteurs de recherche d'une part, et les troisième et quatrième vecteurs de recherche d'autre part, étant de sens respectifs opposés.

3. Procédé selon l'une quelconque des revendications précédentes, suivant lequel une amplitude des vecteurs de recherche correspondant à une répétition de l'étape /a/ est déterminée en sélectionnant la plus grande valeur parmi une valeur de seuil donnée, une composante horizontale divisée par deux et une composante verticale divisée par deux du vecteur de recherche correspondant au vecteur de mouvement sélectionné à l'étape /b/ précédant ladite étape /a/.

4. Procédé selon l'une quelconque des revendications précédentes, suivant lequel la règle de sélection appliquée à l'étape /b/ est basée sur un calcul de corrélation d'un premier bloc de pixels dans l'image en cours de traitement et d'un second bloc de pixels dans l'image traitée précédente à partir duquel le vecteur candidat pointe le premier bloc de pixels, le vecteur candidat permettant une corrélation la plus élevée étant sélectionné.

5. Procédé selon l'une quelconque des revendications précédentes, suivant lequel l'ensemble de vecteurs de mouvement parmi lesquels le vecteur de mouvement de référence est sélectionné pour la première itération de l'étape /a/ comprend en outre le vecteur nul.

**6.** Procédé selon l'une quelconque des revendications précédentes, suivant lequel m est égal à 2 et k est égal à 4.

**7.** Dispositif de détection de déplacement d'une entité pourvue d'un capteur mobile de séquence d'images comprenant pour associer un vecteur de mouvement à une image de la séquence en cours de traitement :

- des moyens de génération pour générer (203) k vecteurs candidats en ajoutant, à un vecteur de mouvement de référence, respectivement k vecteurs de recherche ;
- des moyens de sélection pour sélectionner (204) un vecteur de mouvement parmi lesdits k vecteurs candidats en fonction d'une règle de sélection donnée ;
- des moyens de commande pour commander m fois la répétition de la génération de k vecteurs candidats par lesdits moyens de génération et de la sélection par lesdits moyens de sélection, ledit vecteur de mouvement de référence étant d'une part, pour une première génération par les moyens de génération un vecteur de référence initial sélectionné parmi un ensemble de vecteurs comprenant au moins un vecteur de mouvement associé à une image traitée précédente et étant d'autre part, pour les m autres générations par les moyens de génération, le vecteur de mouvement sélectionné par la sélection effectuée précédemment par les moyens de sélection ; et
- des moyens d'association pour associer (207) à l'image en cours de traitement le vecteur fourni par à l'issu des m répétitions de génération et de sélection respectivement par les moyens de génération et de sélection ;

m étant un entier supérieur ou égal à 1 et k étant un entier strictement supérieur à 1 ;
dans lequel une amplitude des vecteurs de recherche correspondant à la première génération des moyens de génération est déterminée en sélectionnant la plus grande valeur parmi une valeur de seuil donnée, une composante horizontale divisée par deux et une composante verticale divisée par deux du vecteur de mouvement associé à l'image traitée précédente.

**8.** Souris optique comprenant un capteur mobile d'images adaptée pour coopérer avec un dispositif de détection de déplacement selon la revendication 7.

**9.** Produit « programme d'ordinateur » chargeable directement dans la mémoire interne d'un ordinateur numérique, comprenant des portions de code de logiciel pour l'exécution des étapes du procédé selon l'une quelconque des revendications 1 à 6.

**Claims**

**1.** Method for detecting movement of an entity provided with an image sequence sensor, the method comprising, in order to associate a motion vector with an image of the sequence currently being processed, the steps consisting in:

/a/ generating (203) k candidate vectors by adding, to a reference motion vector, respectively k search vectors;
/b/ selecting (204) a motion vector from among the said k candidate vectors as a function of a given selection rule;
/c/ repeating the previous two steps m times, the said reference motion vector being on the one hand, for a first iteration of step /a/, an initial reference vector selected from among a set of vectors comprising at least one motion vector associated with a previous processed image and being on the other hand, for the m repetitions of step /a/, the motion vector selected in the step /b/ preceding the said step la/;
/d/ associating (207) the vector obtained in step /c/ with the image currently being processed;

m being an integer greater than or equal to 1 and k being an integer strictly greater than 1;
wherein an amplitude of the search vectors corresponding to the first iteration of step /a/ is determined by selecting the largest value from among a given threshold value, a horizontal component divided by two and a vertical component divided by two of the motion vector associated with the previous processed image.

**2.** Method according to Claim 1, wherein a direction of a first and of a second search vector is horizontal, and a direction of a third and of a fourth search vector is vertical; the first and second search vectors on the one hand, and the third and fourth search vectors on the other hand, being of opposite respective senses.

**3.** Method according to any one of the preceding claims, wherein an amplitude of the search vectors corresponding to a repetition of step /a/ is determined by selecting the largest value from among a given threshold value, a horizontal component divided by two and a vertical component divided by two of the search vector corresponding to the motion vector selected in the step /b/ preceding the said step /a/.

4. Method according to any one of the preceding claims, wherein the selection rule applied to step /b/ is based on a calculation for correlating a first block of pixels in the image currently being processed and a second block of pixels in the previous processed image, on the basis of which the candidate vector points at the first block of pixels, the candidate vector allowing the largest correlation being selected.

5. Method according to any one of the preceding claims, wherein the set of motion vectors from among which the reference motion vector is selected for the first iteration of step /a/ furthermore comprises the zero vector.

6. Method according to any one of the preceding claims, wherein m is equal to 2 and k is equal to 4.

7. Device for detecting movement of an entity provided with a mobile image sequence sensor comprising in order to associate a motion vector with an image of the sequence currently being processed:

- generation means for generating (203) k candidate vectors by adding, to a reference motion vector, respectively k search vectors;
- selection means for selecting (204) a motion vector from among the said k candidate vectors as a function of a given selection rule;
- control means for controlling m times a repetition of the generation of k candidate vectors by said generation means and of the selection by said selection means, the said reference motion vector being on the one hand, for a first generation by the generation means an initial reference vector selected from among a set of vectors comprising at least one motion vector associated with a previous processed image and being on the other hand, for the m other generations by said generation means, the motion vector selected by the selection carried out previously by the selection means;
- association means for associating (207) the vector obtained at the end of the m repetitions of generation and selection respectively by the generation means and selection means;

m being an integer greater than or equal to 1 and k being an integer strictly greater than 1; wherein an amplitude of the search vectors corresponding to the first iteration of step /a/ is determined by selecting the largest value from among a given threshold value, a horizontal component divided by two and a vertical component divided by two of the motion vector associated with the previous processed image.

8. Optical mouse comprising a mobile image sensor suitable for cooperating with a device for detecting movement according to Claim 7.

9. "Computer program" product loadable directly into the internal memory of a digital computer, comprising portions of software code for the execution of the steps of the method according to any one of Claims 1 to 6.

**Patentansprüche**

1. Verfahren zum Erfassen einer Verschiebung einer Einheit, die mit einem Sensor für eine Folge von Bildern versehen ist, wobei das Verfahren zum Zuordnen eines Bewegungsvektors zu einem in Verarbeitung befindlichen Bild der Folge die folgenden Schritte aufweist:

a) Erzeugen (203) von k Kandidatenvektoren, indem zu einem Referenzbewegungsvektor jeweils k Suchvektoren hinzugefügt werden;
b) Auswählen (204) eines Bewegungsvektors unter den k Kandidatenvektoren abhängig von einer gegebenen Auswahlregel;
c) m-maliges Wiederholen der zwei vorangehenden Schritte, wobei der Referenzbewegungsvektor einerseits für eine erste Iteration des Schritts a) ein anfänglicher Referenzvektor ist, der aus einer Gesamtheit an Vektoren ausgewählt wird, die mindestens einen Bewegungsvektor aufweist, der einem vorher verarbeiteten Bild zugeordnet ist, und andererseits für die m Wiederholungen des Schritts a) der Bewegungsvektor ist, der im Schritt b) vor dem Schritt a) ausgewählt wurde;
d) Zuordnen (207) des im Schritt c) erhaltenen Vektors zu dem in Verarbeitung befindlichen Bild;

wobei m eine ganze Zahl größer oder gleich 1 ist und k eine ganze Zahl größer 1 ist;

wobei eine Amplitude der Suchvektoren entsprechend der ersten Iteration des Schritts a) bestimmt wird, indem der größte Wert unter einem gegebenen Schwellenwert, einer durch zwei geteilten horizontalen Komponente und einer durch zwei geteilten vertikalen Komponente des dem vorher verarbeiteten Bild zugeordneten Bewegungsvektors ausgewählt wird.

2. Verfahren nach Anspruch 1, wobei eine Richtung eines ersten und eines zweiten Suchvektors horizontal ist, und eine Richtung eines dritten und eines vierten Suchvektors vertikal ist;

wobei die ersten und zweiten Suchvektoren einerseits, und die dritten und vierten Suchvektoren andererseits, in jeweils entgegengesetzte Richtungen verlaufen.

3. Verfahren nach einem der vorstehenden Ansprüche, wobei eine Amplitude der Suchvektoren entsprechend einer Wiederholung des Schritts a) bestimmt wird, indem der größte Wert unter einem gegebenen Schwellenwert, einer durch zwei geteilten horizontalen Komponente und einer durch zwei geteilten vertikalen Komponente des Suchvektors, der dem Bewegungsvektor entspricht, der im Schritt b) vor dem Schritt a) ausgewählt wurde, ausgewählt wird.

4. Verfahren nach einem der vorstehenden Ansprüche, wobei die im Schritt b) angewendete Auswahlregel auf einer Korrelationsberechnung eines ersten Pixelblocks in dem in Verarbeitung befindlichen Bild und eines zweiten Pixelblocks in dem vorher verarbeiteten Bild basiert, von dem der Kandidatenvektor auf den ersten Pixelblock zeigt, wobei der Kandidatenvektor ausgewählt wird, der die höchste Korrelation aufweist.

5. Verfahren nach einem der vorstehenden Ansprüche, wobei die Gesamtheit an Bewegungsvektoren, aus welchen der Referenzbewegungsvektor für die erste Iteration des Schritts a) ausgewählt wird, zudem den Nullvektor aufweist.

6. Verfahren nach einem der vorstehenden Ansprüche, wobei m gleich 2 ist und k gleich 4 ist.

7. Vorrichtung zur Erfassung einer Verschiebung einer Einheit, die mit einem mobilen Sensor für eine Folge von Bildern versehen ist, wobei die Vorrichtung zum Zuordnen eines Bewegungsvektors zu einem in Verarbeitung befindlichen Bild der Folge Folgendes aufweist:

eine Erzeugungseinrichtung zum Erzeugen (203) von k Kandidatenvektoren, indem zu einem Referenzbewegungsvektor jeweils k Suchvektoren hinzugefügt werden;

eine Auswahleinrichtung zum Auswählen (204) eines Bewegungsvektors unter den k Kandidatenvektoren abhängig von einer gegebenen Auswahlregel;

eine Befehlseinrichtung zum m-maligen Befehlen der Wiederholung der Erzeugung von k Kandidatenvektoren durch die Erzeugungseinrichtung und der Auswahl durch die Auswahleinrichtung, wobei der Referenzbewegungsvektor einerseits für eine erste Erzeugung durch die Erzeugungseinrichtung ein anfänglicher Referenzvektor ist, der aus einer Gesamtheit an Vektoren ausgewählt wird, die zumindest einen Bewegungsvektor aufweist, der einem vorher verarbeiteten Bild zugeordnet ist, und andererseits für die m anderen Erzeugungen durch die Erzeugungseinrichtung der Bewegungsvektor ist, der durch die Auswahl, die vorher durch die Auswahleinrichtung bewirkt wurde, ausgewählt wurde; und

eine Zuordnungseinrichtung zum Zuordnen (207) des Vektors, der nach Abschluss von m Wiederholungen von jeweils der Erzeugung und der Auswahl durch die Erzeugungseinrichtung und die Auswahleinrichtung bereitgestellt wird, zu dem in Verarbeitung befindlichen Bild,

wobei m eine ganze Zahl größer oder gleich 1 ist und k eine ganze Zahl größer 1 ist;

wobei eine Amplitude der Suchvektoren entsprechend der ersten Erzeugung der Erzeugungseinrichtung bestimmt wird, indem der größte Wert unter einem gegebenen Schwellenwert, einer durch zwei geteilten horizontalen Komponente und einer durch zwei geteilten vertikalen Komponente des dem vorher verarbeiteten Bild zugeordneten Bewegungsvektors ausgewählt wird.

8. Optische Maus mit einem mobilen Sensor für Bilder, die angepasst ist, um mit einer Vorrichtung zur Erfassung einer Verschiebung nach Anspruch 7 zu kooperieren.

9. Rechnerprogrammprodukt, das direkt in den internen Speicher eines Digitalrechners ladbar ist, mit Softwarecodeanteilen zum Ausführen der Verfahrensschritte nach einem der Ansprüche 1 bis 6.

FIG.1A.

FIG.1B.

FIG.2.

FIG.3.

APPLIQUER VECTEUR NUL
ET CALCULER CORRÉLATION — 302

MÉMORISER RÉSULTAT 1 — 303

APPLIQUER VECTEUR ASSOCIÉ
À IMAGE PRÉCÉDENTE ET
CALCULER CORRÉLATION — 303

MÉMORISER RÉSULTAT 2 — 305

SÉLECTIONNER VECTEUR
DE RÉFÉRENCE SUR LA
BASE D'UNE COMPARAISON
DES RÉSULTAT 1 ET RÉSULTAT 2 — 306

FIG.4.

**EP 1 746 487 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1361541 A1